# EUROPEAN PATENT APPLICATION

(11) **EP 4 756 279 A1**
(43) Date of publication of application: **10.06.2026**
(21) Application number: 24217154.4
(22) Date of filing: 03.12.2024
(51) Int. Cl.: F16L 59/16, F16L 59/18

(54) **AN INSULATION ARRANGEMENT**

(71) Applicant: Iso Box.ApS, 4490 Jerslev Sjælland (DK)
(72) Inventor: Tufvesson, Martin, 4490 Jerslev Sjælland (DK)
(74) Representative: Patrade A/S

(57) **Abstract**

The present invention relates to an insulation arrangement, preferably an insulation box and preferably for insulating valves and/or flanges, said insolation arrangement comprising: a housing, said housing comprising: one or more outer walls, one or more inner walls, wherein said one or more inner walls form a cavity, at least two magnets, wherein said housing comprises at least two housing parts: a first housing part, and a second housing part, wherein the at least two magnets are arranged respectively in connection with the first housing part and the second housing part, and wherein the first housing part and the second housing part is adapted to be connectable and disconnectable via the at least two magnets.

Furthermore, the invention relates to a method for arranging an insulation arrangement around an element in a pipe system, said element preferably being a valve or a flange.

## Description

### FIELD OF THE INVENTION

The present invention relates to an insulation arrangement, preferably an insulation box and preferably for insulating valves and/or flanges,
said insolation arrangement comprising:
   - a housing, said housing comprising:
      - one or more outer walls,
      - one or more inner walls,
      - wherein said one or more inner walls form a cavity,
   - at least two magnets,
wherein said housing comprises at least two housing parts:
   - a first housing part, and
   - a second housing part, and
wherein the at least two magnets are arranged respectively in connection with the first housing part and the second housing part,
wherein the first housing part and the second housing part is adapted to be connectable and disconnectable via the at least two magnets.

Furthermore, the invention relates to a method for arranging an insulation arrangement around an element in a pipe system, said element preferably being a valve or a flange, wherein said method comprises the steps of:
- providing a first housing part and a second housing part of a housing of the insulation arrangement,
- if required, such as if not made on beforehand, making one or more through-going cut-outs in the housing parts corresponding to pipe(s) protruding from the element,
- arranging the first housing part for surrounding at least substantially a first half of the element to be surrounded,
- arranging the second housing part for surrounding at least substantially a second half of the element to be surrounded,
- assembling the first and second housing parts around the element by connecting at least two magnets positioned respectively in connection with the first and the second housing part.
- preferably sealing between the one or more cut-outs to the surface and the one or more pipes, said sealing preferably being made with at least substantially silicone.

### BACKGROUND OF THE INVENTION

Within the area of insulation arrangements, such as insulation boxes numerous solutions of such arrangements are available, however none of those arrangements provides a solution of efficient insulation effectivity while saving material, such as decreasing the need of the insulation material preferably being foam.

Furthermore, the known insulation boxes have challenges with condensation, especially on the outer surface of the boxes. They thereby lose a lot of unnecessary energy.

Moreover, the insulation arrangements available today, are boxes being unacceptably troublesome to install and/or arrange in a pipe system.

Hence, an improved insulation arrangement, preferably an efficient and reliable arrangement, suitable for being arranged/installed in a pipe system would be advantageous.

### OBJECT OF THE INVENTION

It is an object of the present invention to provide an alternative to the prior art.

In particular, it may be seen as an object of the present invention to provide a system that solves the above mentioned problems.

### DESCRIPTION OF THE INVENTION

Thus, the above described object and several other objects are intended to be obtained in a first aspect of the invention by providing an insulation arrangement, preferably an insulation box and preferably for insulating valves and/or flanges,
said insolation arrangement comprising:
   - a housing, said housing comprising:
      - one or more outer walls,
      - one or more inner walls,
      - wherein said one or more inner walls form a cavity,
   - at least two magnets,
wherein said housing comprises at least two housing parts:
   - a first housing part, and
   - a second housing part, and
wherein the at least two magnets are arranged respectively in connection with the first housing part and the second housing part,
wherein the first housing part and the second housing part is adapted to be connectable and disconnectable via the at least two magnets.

The invention is particularly, but not exclusively, advantageous for providing an elimination of condensation to minimize unnecessary waste of energy, to avoid any burn or incineration.

Further, insulation of valves can lower the temperature in technical rooms, boiler rooms and pipe tunnels. This means a more comfortable working temperature, a reduced heat loss and thus a better heating economy.

In the context of the present invention, it should be understood that when the arrangement is arranged in a pipe system, the element of the pipe system, such as a valve, is positioned in a cavity formed by the inner walls of the housing.

In one embodiment of the invention, the at least two magnets are arranged at least partly respectively in the first and second housing parts.

In one embodiment of the invention, the at least two magnets are arranged opposite each other at the two respective housing parts.

The embodiments are particularly, but not exclusively, advantageous for allowing an easy connection of the two housing parts via the magnets.

Within the invention, it should be understood, that the magnets may be visible and/or invisible arranged inside the housing parts.

The magnets may as an example have one visible surface when arranged in a housing part or the magnet may by completely surrounded by the material of the housing part.

In one embodiment of the invention, the at least two magnets are arranged in a cut-out and/or in a milled groove in the housing parts, preferably the magnets are glued into the cut-out and/or groove.

The embodiment is particularly, but not exclusively, advantageous for providing easy, efficient and secure attachment/mounting of the magnets in the housing parts.

An even further securing of the magnets remains in the cut-out/groove, the magnets may preferably be glued into the cut-out/groove.

In one embodiment of the invention, the insulation arrangement comprises four, six or eight magnets.

The embodiment is particularly, but not exclusively, advantageous for proving an insulation arrangement wherein the connection can be even further efficient and secure by arranging a higher number of magnets.

Within the invention, a preferred embodiment is an arrangement, wherein 4 magnets are arranged on each housing parts.

However, within the invention, the number of magnets can be varying. The stronger connection of the two housing parts needed, the more magnets should be provided.

In some embodiments one magnet on each housing part may be enough, in other embodiments, two, three or four magnets on each housing parts may be enough, and in some embodiments five, six, seven, eight, nine or even more magnets on each housing parts may be provided.

In one embodiment of the invention, the first and the second housing parts are at least substantially symmetrical.

The embodiment is particularly, but not exclusively, advantageous for providing an arrangement, wherein the two housing parts are fitting each other and thereby are easy to connect.

In one embodiment of the invention, the first and the second housing part is made at least partly of foam, preferably wherein the first and the second housing part is at least partly made of polypropylene, more preferably expanded polypropylene (EPP).

The embodiment is particularly, but not exclusively, advantageous for providing an insulation arrangement, wherein the most optimal and efficient insulation effect is provided. The better insulation effect of the material, the less material is needed. Thereby also material savings are ensured.

In one embodiment of the invention, the housing parts comprise an outer surface being in a different material than the material of the housing parts.

In one embodiment of the invention, the housing comprises an outer surface being:
- a cladding,
   and/or
- a coating.

In one embodiment of the invention, the outer surface, the cladding and/or the coating is a polymer, preferably a plastic polymer, more preferably a polyvinyl chloride (PVC).

The embodiments concerning outer surface/cladding/coating are particularly, but not exclusively, advantageous for providing a further optimization of the insulation efficiency.

Moreover, the embodiments are advantageous for providing a box that is robust, have an optimal strength, tolerates a proper cleaning, has a minimum weight, and can tolerate temperatures of -40 to 250 degrees, maybe even lower and/or higher temperatures.

In one embodiment of the invention, the housing parts comprise an inner surface being in a different material than the material of the housing, preferably said inner surface being an at least partly silicone surface.

The embodiment is particularly, but not exclusively, advantageous for providing a better insulation effect for cooling boxes.

In one embodiment of the invention, the first and second housing parts are connected with at least one hinge.

The embodiment is particularly, but not exclusively, advantageous for providing an extra connection opportunity for the at least two housing parts.

In one embodiment of the invention,
- a top wall and/or a bottom wall of the housing are a flat wall,
   and/or
- one or more side walls of the housing are rounded.

The embodiment is particularly, but not exclusively, advantageous for fitting into a pipe system.

In the context of the present invention, "flat" may be understood as plain, straight, not-rounded, horizontal, or the like.

In the context of the present invention, "rounded" may be understood as curved or the like.

In one embodiment of the invention, the insulation arrangement is adapted for being a:
- cooling insolation arrangement, preferably for temperatures in the range of -180 to +5 degrees, such as a cooling box,
   and/or
- heating and/or vapor/steam insulation arrangement, preferably for temperatures in the range of 0 to +250 degrees, such as a heating box.

The embodiment is particularly, but not exclusively, advantageous for providing a low surface temperature. The temperatures specified should not necessarily be understood as limiting to the invention, but as examples of temperature ranges.

As an example with 50mm insulation material (foam):
+250 degrees inside the arrangement and only about 25 degrees on the surface.
   Or
-40 degrees inside the arrangement and only about 25 degrees on the surface.

In one embodiment of the invention, one or more assembly lines of the first and second housing parts are made in a line different from a straight line, such as a staggered assembly line.

The embodiment is particularly, but not exclusively, advantageous for ensuring a tightly joint, such that as less energy as possible is lost.

The staggered assembly line is preferred for high temperature boxes, however, can also be used for low temperature boxes.

In the context of the present invention, "assembly line" may be understood as joint line or the like.

In a second aspect, the invention further relates to a method for arranging an insulation arrangement around an element in a pipe system, said element preferably being a valve or a flange,
wherein said method comprises the steps of:
   - providing a first housing part and a second housing part of a housing of the insulation arrangement,
   - if required, such as if not made on beforehand, making one or more cut-outs in the housing parts corresponding to pipe(s) protruding from the element,
   - arranging the first housing part for surrounding at least substantially a first half of the element to be surrounded,
   - arranging the second housing part for surrounding at least substantially a second half of the element to be surrounded,
   - assembling the first and second housing parts around the element by connecting at least two magnets positioned respectively on the first and the second housing part, such that the element is positioned in a cavity formed by the inner walls of the housing,
   - preferably sealing between the one or more cut-outs to the surface and the one or more pipes, said sealing preferably being made with at least substantially silicone,
wherein the steps of the method can be executed in any order and/or executed simultaneously.

The second aspect of the invention is particularly, but not exclusively, advantageous for providing a method improving the convenience of arranging/mounting/installing insulation boxes in a pipe system.

The method is moreover efficient and reliable.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates a 3D drawing of an insulation arrangement.
Figures 2a-b illustrate a 3D drawings of insulation arrangement in different shapes.
Figures 3a-d illustrate parts of the arrangement.
Figures 4a-c illustrate an installed/mounted insulation arrangement on the pipe system.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

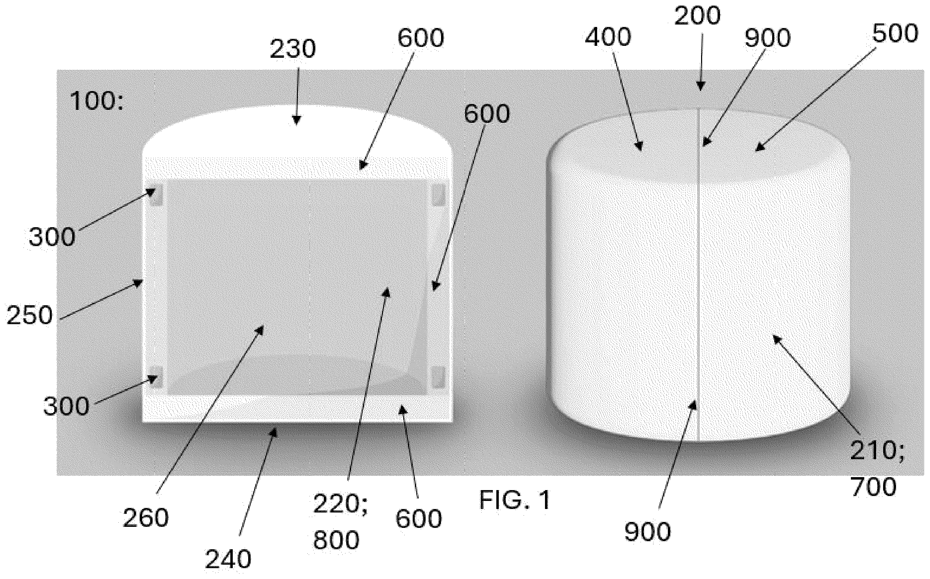

FIG. 1 illustrates a 3D drawing of an insulation arrangement, being an insulation box for insulating valves and/or flanges, said insolation arrangement comprising:
- a housing 200, said housing comprising:
   - one or more outer walls 210,
   - one or more inner walls 220,
   - wherein said one or more inner walls form a cavity 260,

wherein said housing comprises at least two housing parts:
   - a first housing part 400, and
   - a second housing part 500, and
   - at least two magnets 300, in FIG. 1 four magnets on each housing parts are illustrated, thereby in total eight magnets,
wherein the magnets 300 are arranged respectively in connection with the first housing part 400 and the second housing part 500, and
wherein the first housing part 400 and the second housing part 500 is adapted to be connectable and disconnectable via the at least two magnets 300.

The magnets 300 are arranged in a cut-out in the housing parts 400,500 and are arranged opposite each other at the two respective housing parts 400,500.

In FIG. 1, the first housing part 400 and the second housing part 500 are at least substantially symmetrical. In FIG. 1 the symmetry is both about a vertical and a horizontal centerline. However, in some embodiments the symmetry may only be about one centerline, or there may be embodiment wherein the two housing parts are not symmetrical.

The housing parts may in some embodiments be at least substantially identical, as in FIG 1, or the housing parts may be none identical.

The embodiment in FIG 1, illustrates a top wall 230 and/or a bottom wall 240 of the housing being a flat wall and one or more side walls 250 of the housing being rounded. Also is illustrated an assembly line 900 of the first and second housing parts being a straight line.

However, in some embodiment, the assembly line may be different from straight, such as a staggered assembly line (not shown).

Furthermore, FIG. 1 is illustrating the first housing part 400 and second housing part 500 comprising an outer surface 700 being in a different material than the material of the housing parts 400, 500, such as an outer surface 700 being:
- a cladding,
   and/or
- a coating
preferably the outer surface 700, the cladding and/or the coating is a polymer, preferably a plastic polymer, more preferably a polyvinyl chloride (PVC).

Moreover, the first housing part 400 and the second housing part 500 may comprise an inner surface 800 being in a different material than the material of the housing parts 400, 500, preferably said inner surface 800 being an at least partly silicone surface.

The insulation box illustrated in FIG. 1 is preferably adapted to be arranged around an element in a pipe system, said element preferably being a valve or a flange,
wherein said method comprises the steps of (said method not illustrated):
   - providing a first housing part 400 and a second housing part 500 of a housing of the insulation arrangement,
   - if required, such as if not made on beforehand, making one or more through-going cut-outs in one or more of the walls 210, 220, 230, 240 of the housing parts 400, 500 corresponding to pipe(s) protruding from the element,
   - arranging the first housing part 400 for surrounding at least substantially a first half of the element to be surrounded,
   - arranging the second housing part 500 for surrounding at least substantially a second half of the element to be surrounded,
   - assembling the first and second housing parts 400, 500 around the element by connecting at least two magnets 300 positioned respectively in connection with the first and the second housing part,
   - preferably sealing between the one or more cut-outs to the surface and the one or more pipes, said sealing preferably being made with at least substantially silicone,
wherein the steps of the method can be executed in any order and/or executed simultaneously.

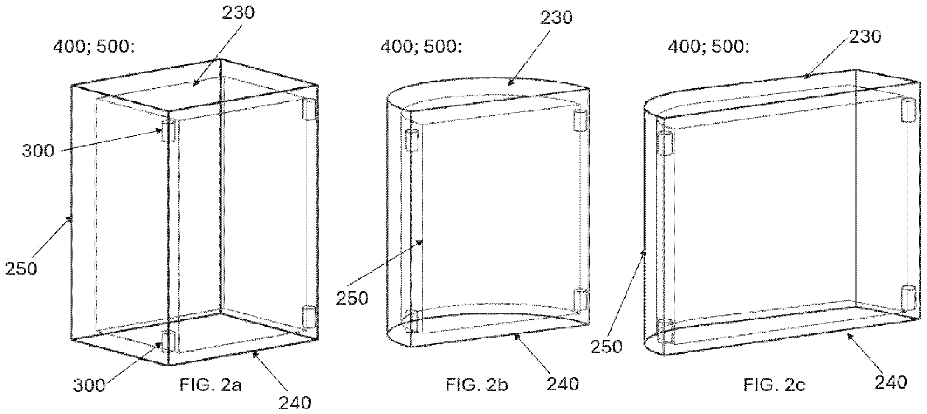

FIG. 2a-c illustrate a 3D drawings of insulation arrangement in different shapes.

The embodiment in FIG 2a, illustrates a top wall 230 and/or a bottom wall 240 of the housing being a flat wall and one or more side walls 250 of the housing also being flat.

The embodiment in FIG 2b, illustrates a top wall 230 and/or a bottom wall 240 of the housing being a flat wall and one or more side walls 250 of the housing being a rounded.

The embodiment in FIG 2c, illustrates a top wall 230 and/or a bottom wall 240 of the housing being a flat wall and one or more side walls 250 of the housing being a rounded and one or more side wall being flat.

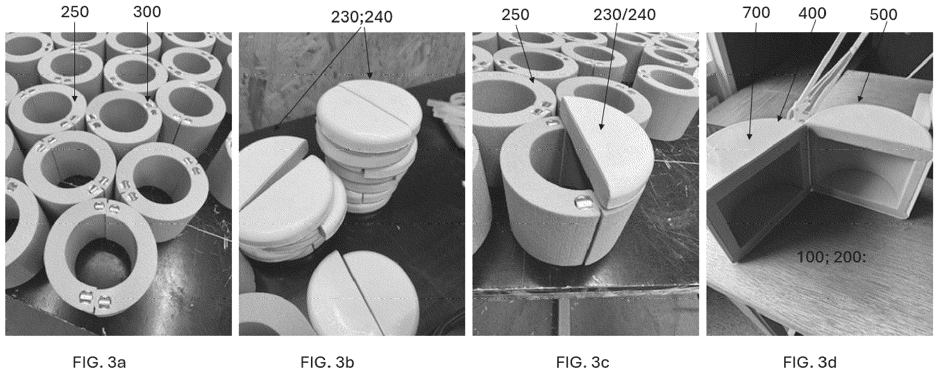

FIG. 3a-d illustrate parts of the arrangement.

FIG. 3a illustrates an insulation arrangement wherein the side walls of the first housing part 400 and the second housing part 500 are made of foam 600, such as polypropylene, more preferably expanded polypropylene (EPP).

FIG. 3b illustrates an insulation arrangement wherein the top walls and bottom walls of the first housing part 400 and the second housing part 500 are made of foam 600, such as polypropylene, more preferably expanded polypropylene (EPP), and comprise an outer surface 700 being in a different material than the material of the housing parts 400, 500.

Thereby an embodiment is illustrated, wherein the side walls 250 of the housing parts and the top walls 230 and bottom walls 240 are separate parts being connected to each other.

The connection may be made by glue, by magnet 300, and/or by and outer surface.

FIG. 3c illustrates an insulation arrangement wherein the side walls of first housing part 400 and the second housing part 500 and a top/bottom wall 230/240 are made ready for being connected.

FIG. 3d illustrates an insulation arrangement being fully assembled and all part are connected, wherein the first housing part 400 and second housing part 500 comprise an outer surface 700 being in a different material than the material of the housing parts 400, 500.

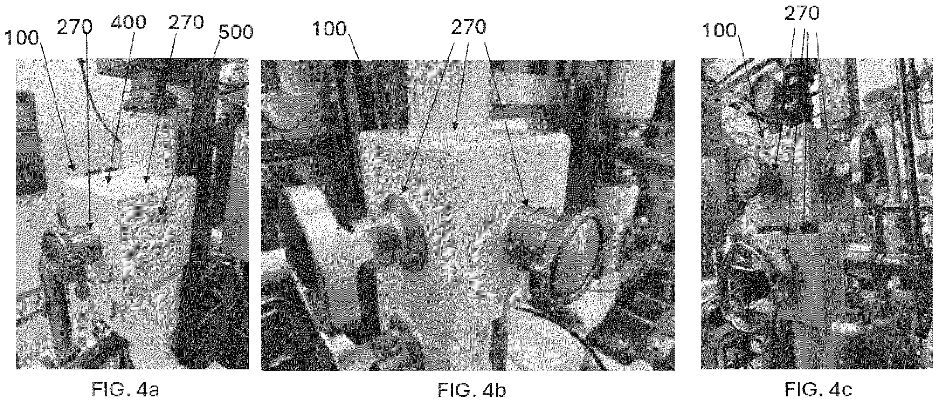

FIG. 4 illustrates an installed/mounted insulation arrangement on the pipe system.

The FIG. 4 illustrates the through-going cut-outs 700 in one or more of the walls of the housing parts 400, 500 corresponding to pipe(s) or other objects in the pipe system protruding from the element.

Preferably, a sealing is also provided between the one or more cut-outs to the surface and the one or more pipes, said sealing preferably being made with at least substantially silicone.

Also, different shapes and sizes of the insulation arrangement 100 and the housing parts 400,500 are illustrated.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### REFERENCE LIST

**An insulation arrangement (100)**
Housing (200)
   Outer walls (210)
   Inner walls (220)
   Top walls (230)
   Bottom walls (240)
   Side walls (250)
   Cavity (260)
   Though going cut-outs (270)
Magnets (300)
First housing part (400)
Second housing part (500)
Foam (600),
Outer surface (700)
Inner surface (800)
Assembly lines (900)

## Claims

1. **An insulation arrangement (100),** preferably an insulation box and preferably for insulating valves and/or flanges,
said insolation arrangement comprising:
- a housing (200), said housing comprising:
- one or more outer walls (210),
- one or more inner walls (220),
- wherein said one or more inner walls form a cavity (260),
- at least two magnets (300),
wherein said housing comprises at least two housing parts:
- a first housing part (400), and
- a second housing part (500), and
wherein the at least two magnets (300) are arranged respectively in connection with the first housing part (400) and the second housing part (500), and
wherein the first housing part (400) and the second housing part (500) are adapted to be connectable and disconnectable via the at least two magnets (300).

2. An insulation arrangement (100) according to claim 1, wherein the at least two magnets (300) are arranged at least partly respectively in the first (400) and second housing parts (500).

3. An insulation arrangement (100) according to one or more of the preceding claims, wherein the at least two magnets (300) are arranged in a cut-out and/or in a milled groove in the housing parts (400, 500),
preferably the magnets (300) are glued into the cut-out and/or groove.

4. An insulation arrangement (100) according to one or more of the preceding claims, wherein the at least two magnets (300) are arranged opposite each other at the two respective housing parts (400, 500).

5. An insulation arrangement (100) according to one or more of the preceding claims, wherein the insulation arrangement comprises four, six or eight magnets (300).

6. An insulation arrangement (100) according to one or more of the preceding claims, wherein the first housing part (400) and the second housing part (500) are at least substantially symmetrical.

7. An insulation arrangement (100) according to one or more of the preceding claims, wherein the first housing part (400) and the second housing part (500) are made at least partly of foam (600),
preferably wherein the first and the second housing part are at least partly made of polypropylene, more preferably expanded polypropylene (EPP).

8. An insulation arrangement (100) according to one or more of the preceding claims, wherein the first housing part (400) and second housing part (500) comprise an outer surface (700) being in a different material than the material of the housing parts (400, 500).

9. An insulation arrangement (100) according to one or more of the preceding claims, wherein the housing comprises an outer surface (700) being:
- a cladding,
and/or
- a coating.

10. An insulation arrangement (100) according to claim 8 and/or 9, wherein the outer surface (700), the cladding and/or the coating is a polymer, preferably a plastic polymer, more preferably a polyvinyl chloride (PVC).

11. An insulation arrangement (100) according to one or more of the preceding claims, wherein the first housing part (400) and the second housing part (500) comprise an inner surface (800) being in a different material than the material of the housing parts (400, 500), preferably said inner surface (800) being an at least partly silicone surface.

12. An insulation arrangement (100) according to one or more of the preceding claims,
- wherein a top wall (230) and/or a bottom wall (240) of the housing are a flat wall, and/or
- wherein one or more side walls (250) of the housing are rounded.

13. An insulation arrangement (100) according to one or more of the preceding claims, wherein the insulation arrangement is adapted for being a:
- cooling insolation arrangement, preferably for temperatures in the range of -80 to 5 degrees, such as a cooling box,
and/or
- heating and/or vapor insulation arrangement, preferably for temperatures in the range of 0 to 250, such as a heating box.

14. An insulation arrangement (100) according to one or more of the preceding claims, wherein one or more assembly lines (900) of the first and second housing parts are made in a line different from a straight line, such as a staggered assembly line.

15. **A method for arranging an insulation arrangement around an element** in a pipe system, said element preferably being a valve or a flange,
preferably the method of arrangement is performed with an arrangement (100) according to one or more of claim 1-14,
wherein said method comprises the steps of:
- providing a first housing part (400) and a second housing part (500) of a housing of the insulation arrangement,
- if required, such as if not made on beforehand, making one or more through-going cut-outs in one or more of the walls (210, 220, 230, 240) of the housing parts (400, 500) corresponding to pipe(s) protruding from the element,
- arranging the first housing part (400) for surrounding at least substantially a first half of the element to be surrounded,
- arranging the second housing part (500) for surrounding at least substantially a second half of the element to be surrounded,
- assembling the first and second housing parts (400, 500) around the element by connecting at least two magnets (300) positioned respectively in connection with the first and the second housing part,
- preferably sealing between the one or more cut-outs to the surface and the one or more pipes, said sealing preferably being made with at least substantially silicone,
wherein the steps of the method can be executed in any order and/or executed simultaneously.
